# EUROPÄISCHE PATENTANMELDUNG

(11) **EP 1 081 105 A2**
(43) Veröffentlichungstag der Anmeldung: **07.03.2001**
(21) Anmeldenummer: 00117423.4
(22) Anmeldetag: 11.08.2000
(51) Int. Cl.: C03B 11/06, C03B 11/10

(54) **Bildschirm und Vorrichtungen zu seiner Herstellung**

(30) Priorität: 01.09.1999 DE 19941571
(71) Anmelder: Schott Glas, 55122 Mainz (DE); CARL-ZEISS-STIFTUNG trading as Schott Glas, 55122 Mainz (DE)
(72) Erfinder: Biedendorf, Ralf, 55411 Bingen (DE)
(74) Vertreter: Fuchs Mehler Weiss & Fritzsche

(57) **Zusammenfassung**

Bildschirm und Vorrichtung zu seiner Herstellung.

Flache Frontscheiben sind von wachsender Bedeutung. Ein Problem dieser Bildschirme ist, daß sie wegen der geringen Krümmung dem Unterdruck weniger standhalten und stärker implosionsgefährdet sind. Dies wird gemindert, indem die Höhe des umlaufenden Steges vergrößert wird, so daß er die zusätzliche Spannung aufnehmen kann. Durch den hohen Bildschirmsteg verliert man aber den Grad an Flachheit. Die Erfindung soll einen Bildschirm bzw. eine Vorrichtung zu dessen Herstellung bereitstellen, mit der flache Fernseher bzw. Monitore mit niedriger Implosionsgefahr gebaut werden können.

Der erfindungsgemäße Bildschirm weist einen Steg (3) auf, der an seinem der Frontscheibe (2) abgewandten Ende breiter ausgebildet ist, als in den übrigen Stegbereichen. Diese Materialverstärkung (6) kann zusätzliche Spannungen aufnehmen, so daß die Steghöhe verringert werden kann, ohne daß die Implosionsgefahr gegenüber höheren herkömmlichen Stegen zunimmt.

Herstellung von flachen Bildschirmröhren ohne Erhöhung der Implosionsgefahr.

## Beschreibung

Die Erfindung bezieht sich auf einen Bildschirm, der eine Frontscheibe, einen umlaufenden Steg, dessen Außenfläche in einem umlaufend ringförmigen Bereich, im folgenden KC-Fläche genannt, im wesentlichen parallel zur Achse ist, die senkrecht zur Oberfläche durch den Mittelpunkt der Frontscheibe verläuft und eine stirnseitig auf dem Steg umlaufende Lötkante aufweist. Ein derartiger Bildschirm ist beispielsweise aus der DE 34 43 498 A1 bekannt.

Die Erfindung bezieht sich auch auf zwei Vorrichtungen zum Pressen eines derartigen Bildschirms aus einem Glasposten mit einem Preßwerkzeug, die einen Preßstempel, ein Formunterteil und einen darauf außen bündig aufsitzenden Halsring aufweisen, wie sie in der DE 198 23 710 A1 bekannt sind.

Bildschirme werden zur Herstellung von Kathodenstrahlröhren benötigt, die beispielsweise in Fernsehern oder Monitoren verwendet werden. Die Hauptbestandteile einer Bildröhre sind der Bildschirm, der Trichter, im Falle einer Farbbildröhre eine Schlitzmaske, eine Elektronenkanone, eine Ablenkeinheit für die Elektronenstrahlen und ein Implosionsschutzrahmen.

Im Verlaufe des Herstellungsprozesses einer Bildröhre wird auf die Kontaktfläche des Trichters zum Schirm, die Lötfläche, ein Glaslot aufgebracht. Zur Verbindung des Trichters mit dem Bildschirm, die beide aus Glas bestehen, wird der Trichter mit dem Hals nach unten in ein Gestell eingelegt und der Schirm mit seiner am umlaufenden Steg ausgebildeten Lötfläche daraufgesetzt. Danach werden die beiden Teile durch einen Tunnelofen transportiert, in dem das Glaslot schmelzflüssig wird. Durch das Eigengewicht des Schirms wird das Glaslot gleichmäßig zwischen den Lötflächen verteilt. Nach dem Abkühlen sind Schirm und Trichter fest miteinander verbunden. Anschließend wird das Elektronenstrahlsystem in den Trichterhals eingeschmolzen.

Kathodenstrahlröhren müssen im Hochvakuum betrieben werden. Um dieses Hochvakuum zu erzeugen, werden die Bildröhren in einem weiteren Tunnelofen auf 350°C aufgeheizt und dabei über den noch offenen Trichterhals luftleer gepumpt. Am Ende dieses Vorganges, der etwa 2 1/2 Stunden dauert, wird der Trichterhals zugeschmolzen. Durch das Evakuieren wird der Bildschirm durch den Umgebungsdruck stark belastet. Durch den Druck verformt sich der Schirm um einige zehntel Millimeter. Um den Schirm zu stabilisieren und somit die Bildröhre wirksam vor Implosionen zu schützen, wird außen auf dem Schirmsteg ein Stahlrahmen aufgeschrumpft. Dazu wird der Rahmen induktiv auf 450°C aufgeheizt und die Bildröhre mit dem Schirm voran in den Rahmen eingeschoben. Als letztes wird auf dem Trichterhals die Ablenkeinheit aufgesetzt.

Bildschirme werden aus Glas gepreßt. Der Preßvorgang ist in Figur 6 dargestellt, die ein konventionelles Preßwerkzeug 10 zeigt. Das Preßwerkzeug 10 besteht aus einem Preßstempel 11, einem Formunterteil 13 sowie einem Halsring 12. Ein Glastropfen 16 fällt in die aus Halsring 12 und Formunterteil 13 gebildete Form und wird durch Pressen mit dem Preßstempel 11 in die gewünschte Form gebracht. Die umlaufende Fläche, auf die beim fertigen Bildschirm der Implosionsschutzrahmen aufgeschoben wird (auch KC-Fläche genannt), wird von der Innenfläche 14 des Halsrings 12 geformt.

An der Stelle, an der Formunterteil 13 und Halsring 12 aneinanderstoßen, schließen die beiden Teile nicht ideal bündig ab. Bei dem gepreßten Bildschirm äußert sich dies darin, daß an der betreffenden Stelle eine Formnaht ausgebildet ist. Diese Formnaht kann als Versatz, wobei entweder der obere Teil oder der untere Teil vorsteht, ausgebildet sein oder als Überpressung, d.h. einen umlaufenden Wulst.

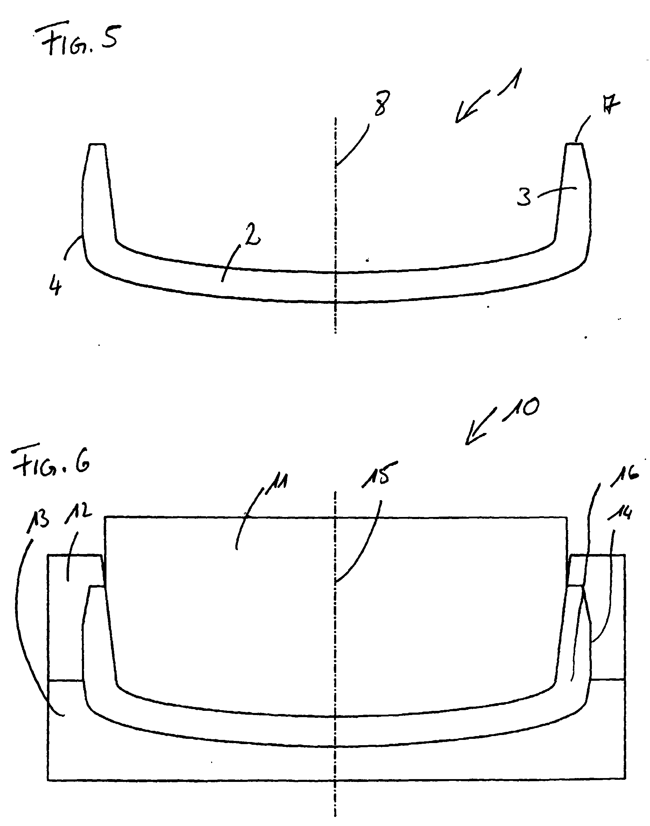

Ein herkömmlicher Bildschirm ist in Figur 5 dargestellt. Der Bildschirm 1 besteht aus einer gewölbten Frontscheibe 2 sowie einem umlaufenden Steg 3, auf dem eine KC-Fläche 5 ausgebildet ist, die parallel zur Mittelachse 8 der Frontscheibe 2 ist und an ihrer unteren Kante eine Formnaht 4 aufweist. Von einem flachen Bildschirm spricht man ab Krümmungsradien von ca. 10 m. Bei geringeren Krümmungsradien spricht man von gewölbten Bildschirmen.

Flache Frontscheiben sind von wachsender Bedeutung, weil der Trend zu immer flacheren Fernsehern und Monitoren geht. Ein Problem bei den flachen Frontscheiben ist, daß sie wegen ihrer geringen Krümmung dem Druck weniger standhalten und stärker implosionsgefährdet sind als gekrümmte Frontscheiben. Herkömmlicherweise wird die Implosionsgefahr dadurch gemindert, daß die Höhe des umlaufenden Steges so sehr vergrößert wird, daß der Steg die zusätzlichen Spannungen aufnehmen kann. Der Nachteil dieser Methode besteht darin, daß man den Grad an Flachheit, den man beim fertigen Fernseher oder Monitor durch die flache Frontscheibe gewonnen hat, durch den hohen Bildschirmsteg wieder verliert.

Aufgabe der vorliegenden Erfindung ist es, einen Bildschirm bzw. eine Vorrichtung zu dessen Herstellung bereitzustellen, der es erlaubt, flachere Fernseher bzw. Monitore zu bauen, ohne deren Implosionsgefahr zu erhöhen.

Gelöst wird diese Aufgabe durch einen Bildschirm nach Anspruch 1 sowie eine Vorrichtung nach Anspruch 4 und eine Vorrichtung nach Anspruch 6.

Durch die Anordnung von zusätzlichem Material peripher zum Bildschirmsteg, können die Spannungen aufgefangen werden, die durch den erhöhten Krümmungsradius der Frontscheibe hervorgerufen werden, und es kann dennoch die geringe Steghöhe eines Bildschirmes mit gewölbter Frontscheibe beibehalten werden. Dadurch lassen sich Fernseher bzw. Monitore bauen, die flacher sind als herkömmliche Fernseher bzw. Monitore mit Flachbildschirm, ohne die Implosionsgefahr zur erhöhen. Auch die Steghöhe von Bildschirmen mit gewölbter Frontscheibe kann auf diesem Weg verringert werden.

Der Nachteil, daß sich durch den verbreiterten Steg der Umfang des Bildschirmes und damit auch der Umfang eines daraus gebauten Fernsehers oder Monitors erhöht, ist nur ein scheinbarer, da der Implosionsrahmen, der auf die KC-Fläche des Bildschirms aufgeschoben wird, mit Ösen versehen ist, die ohnehin zu einem größeren Umfang des Fernsehers oder Monitors führen, als es dem Bildschirm nach sein müßte.

Durch eine Lötkante mit verglichen mit der Stegverbreiterung geringer Wandstärke wird eine haltbarere Verbindung zwischen dem Bildschirm und dem Trichter ermöglicht. Entspricht nämlich die Breite der Lötkante des Bildschirmstegs der Breite der Trichterlötkante, bildet sich beim Verschmelzen ein Meniskus aus Glaslot und die Lötnaht wird haltbarer.

In einer bevorzugten Ausführungsform ist die Verbreiterung des Stegs zwischen der Lötkante und der KC-Fläche als umlaufender Vorsprung ausgebildet, da dies fertigungstechnisch von Vorteil ist.

Die erfindungsgemäße Vorrichtung zeichnet sich dadurch aus, daß das Formunterteil und der Halsring derart ausgebildet sind, daß die KC-Fläche des Bildschirms einzig und allein von dem Formunterteil geformt wird, während der Halsring ausschließlich den Stegbereich auf der der Frontscheibe abgewandten Seite der KC-Fläche ausbildet. Da der Bildschirmsteg sich anschließend an die KC-Fläche verbreitern soll, ist der von dem Halsring geformte Innenhohlraum tiefer als der von dem Formunterteil geformte Innenhohlraum.

Die angesprochenen Bereiche der Werkzeuginnenflächen erstrecken sich über mehrere Millimeter bis Zentimeter.

In einer weiteren Ausprägung der erfindungsgemäßen Vorrichtung wird auch die Stegverarbeitung von dem Formunterteil mitgeformt. Die Lötkante wird allerdings in beiden Ausprägungen von dem Halsring geformt.

Es ergibt sich bei den erfindungsgemäßen Vorrichtungen der zusätzliche Vorteil, daß die Formnaht auf der der Frontscheibe abgewandten Seite der KC-Fläche ausgebildet ist, so daß es nun möglich ist, den Implosionsschutzrahmen aufzuschieben, ohne den Bildschirm durch Hängenbleiben an der Formnaht zu beschädigen. Auch das Induzieren von Rissen und Spannungen durch Drücken des angelegten Implosionsschutzrahmens auf die Formnaht wird vermieden, so daß der Ausschuß insgesamt verringert wird. Dadurch können die Herstellungskosten gesenkt werden. Für den Endverbrauch bietet dieser Bildschirm den Vorteil, daß die Implosionsgefahr der fertigen Bildröhre geringer ist als bei herkömmlichen Bildröhren.

In einer bevorzugten Ausführungsform ist die die KC-Fläche formende Innenfläche des Formunterteils leicht von der Längsachse des Preßstempels weggeneigt. Beim Abkühlen verzieht sich das Glas derart, daß die KC-Fläche danach vergleichsweise genau parallel zur Längsachse des Preßstempels ist und sich daher der Implosionsschutzrahmen leichter aufschieben und befestigten läßt.

Ausführungsbeispiele der Erfindung sollen anhand der folgenden Figuren näher erläutert werden. Dabei ist zu beachten, daß es sich nur um Prinzipskizzen handelt, die nicht maßstabsgetreu sind.

Dargestellt sind in
- Figur 1: ein Schnitt durch einen Bildschirm,
- Figur 2: ein Schnitt durch ein Preßwerkzeug,
- Figur 3: ein Schnitt durch einen weiteren Bildschirm und in
- Figur 4: ein Schnitt durch ein weiteres Preßwerkzeug.

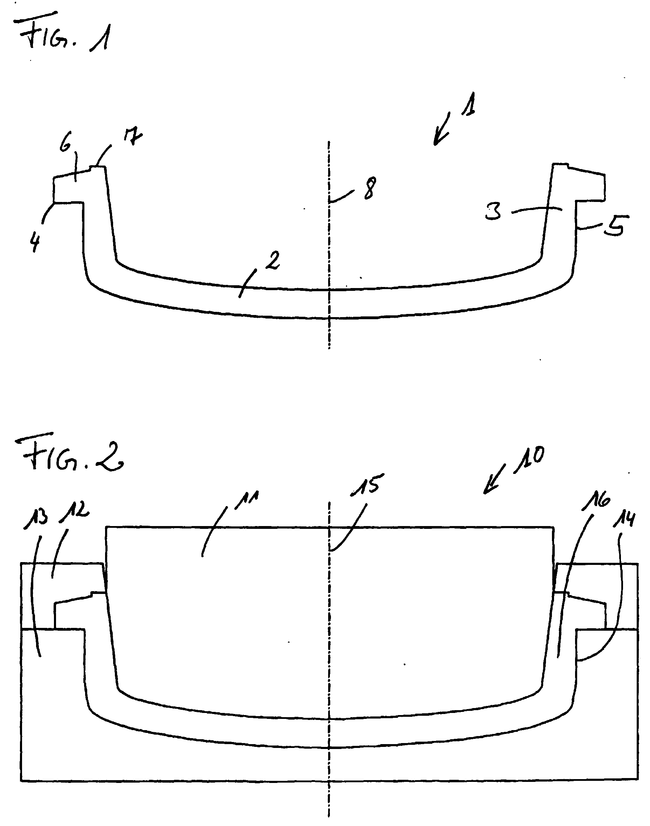

Der in Figur 1 dargestellte Bildschirm 1 besteht im wesentlichen aus einer Frontscheibe 2 und einem umlaufenden Steg 3. Der Steg 3 weist eine KC-Fläche 5 auf. Dabei ist unter der KC-Fläche ein umlaufend ringförmiger Bereich der Außenfläche des Steges 3 zu verstehen, der im wesentlichen parallel zu der Achse 8 verläuft, die senkrecht zur Oberfläche durch den Mittelpunkt der Frontscheibe 2 verläuft. Auf diese KC-Fläche 5 kann ein Implosionsschutzrahmen aufgeschoben werden. Zu der der Frontscheibe 2 abgewandten Seite hin schließt sich an die KC-Fläche 5 ein umlaufender Vorsprung 6 an. Der Vorsprung 6 des Steges 3 mündet in eine umlaufende Lötkante 7, auf die Glaslot aufgebracht werden wird, um den Bildschirm 1 mit dem Trichter zu verbinden. Die Wandstärken im Bereich der Lötkante 7 ist geringer als die Wandstärke des Vorsprungs 6.

In Figur 2 ist ein Preßwerkzeug 10 dargestellt, das aus einem Preßstempel 11, einem Halsring 12 sowie einem Formunterteil 13 besteht. Der Bildschirm 1 aus Fig. 1 wurde mit diesem Werkzeug 10 hergestellt. Die eigentliche Form, in die der Glastropfen 16 fällt, wird durch den Halsring 12 und das Formunterteil 13 gebildet. Der Glastropfen 16 wird von dem Preßstempel 11, der in Pfeilrichtung in die aus Formunterteil 13 und Halsring 12 gebildete Form eingeführt wird, derart ausgepreßt, daß er die Bildschirmform annimmt.

Das Formunterteil 13 ist derart ausgebildet, daß dessen Innenfläche einen Ringbereich 14 aufweist, der parallel zur Längsachse 15 des Preßstempels 11 ist. Dieser Bereich 14 befindet sich im an den Halsring 12 anschließenden Bereich des Formunterteils 13 und dient dazu, die KC-Fläche 5 des Bildschirmes 1 auszuformen.

Der Halsring 12 ist derart ausgebildet, daß er den Vorsprung 6 des Bildschirmsteges 3 des Bildschirmes 1 sowie die Lötkante 7 ausformt.

Der Halsring 12 und das Formunterteil 13 liegen nicht ideal bündig aufeinander auf, so daß sich an ihrem Übergang ein kleiner Schlitz bildet, in dem ebenfalls Glas hineingepreßt wird, was sich in dem Entstehen einer Formnaht 4 äußert. Diese Formnaht 4 wird sich beim fertigen Bildschirm 1 an dem Übergang zwischen der KC-Fläche 5 und dem Vorsprung 6 des Bildschirmsteges 3 befinden.

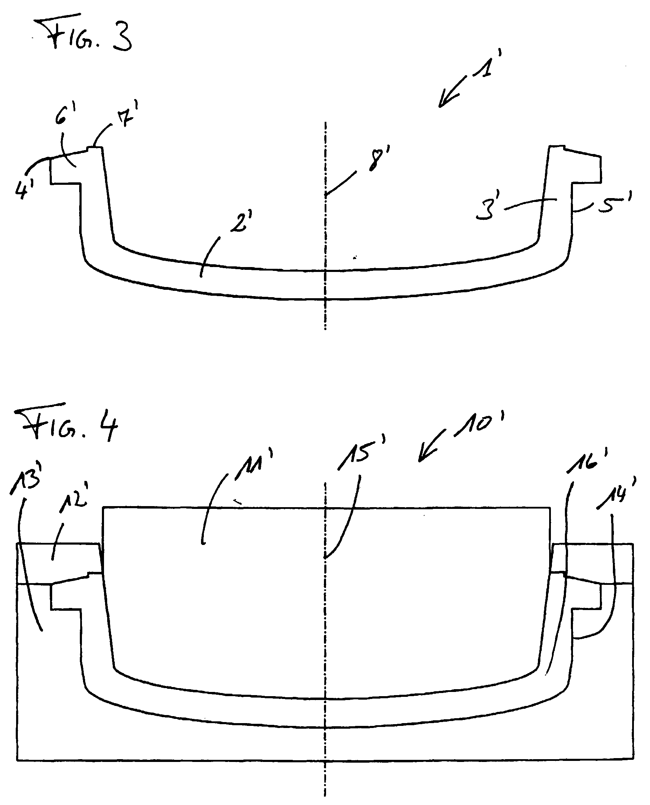

In Fig. 3 ist ein weiterer Bildschirm 1', der mittels des Preßwerkzeuges 10' aus Fig. 4 hergestellt wurde. Beim Pressen wird nicht nur die KC-Fläche 5' durch das Formunterteil 13' geformt, sondern auch der Vorsprung 6'. Am fertigen Bildschirm 1' läßt sich dieser Unterschied dadurch feststellen, daß sich die Formnaht 4' nunmehr an der oberen Kante der Stegverbreiterung 6' befindet.

Nicht dargestellt wurde, daß der die KC-Fläche 5' bildende Innenflächenbereich 14' des Formunterteils 13' um etwa ein Grad von der Längsachse 15' des Preßstempels 11' weggeneigt ist, um eine nach dem Abkühlen senkrechte KC-Fläche 5' zu erhalten.

## Patentansprüche

1. Bildschirm, der eine Frontscheibe (2), einen umlaufenden Steg (3), dessen Außenfläche in einem umlaufend ringförmigen Bereich, der im folgenden KC-Fläche genannt wird, im wesentlichen parallel zur Achse (8) ist, die senkrecht zur Oberfläche durch den Mittelpunkt der Frontscheibe (2) verläuft, und eine stirnseitig auf dem Steg umlaufende Lötkante (7) aufweist und **dadurch gekennzeichnet** ist, daß die Wandstärke des Steges (3) zwischen der Lötkante (7) und dem von der KC-Fläche (5) umfaßten Bereich größer ist als die Wandstärke des Steges (3) in dem von der KC-Fläche (5) umfaßten Bereich.

2. Bildschirm nach Anspruch 1, **dadurch gekennzeichnet**, daß die Breite der Lötkante (7) geringer ist als die Wandstärke des Steges (3) zwischen der Lötkante (7) und dem von der KC-Fläche (5) umfaßten Bereich.

3. Bildschirm nach Anspruch 1 oder 2, **dadurch gekennzeichnet**, daß der Steg (3) zwischen der Lötkante (7) und dem von der KC-Fläche (5) umfaßten Bereich als umlaufender Vorsprung (6) ausgebildet ist.

4. Vorrichtung zum Pressen von Bildschirmen nach Anspruch 1 aus einem Glasposten mit einem Preßwerkzeug (10), das einen Preßstempel (11), ein Formunterteil (13) und einen darauf aufsitzenden Halsring (12) aufweist und **dadurch gekennzeichnet** ist, daß die Innenfläche des Formunterteils (13) im an den Halsring (12) anschließenden Ringbereich (14) im wesentlichen parallel zur Längsachse (15) des Preßstempels (11) ausgebildet ist und daß der Abstand zweier gegenüberliegender Punkte auf der Innenfläche des Formunterteils (13) im an dem Halsring (12) anschließenden Bereich ungleich dem Abstand zweier gegenüberliegender Punkte auf der Innenfläche des Halringes (12) im an das Formunterteil (13) anschließenden Bereich ist.

5. Vorrichtung nach Anspruch 4, **dadurch gekennzeichnet**, daß der Abstand zweier gegenüberliegender Punkte auf der Innenfläche des Formunterteils (13) im an den Halsring (12) anschließenden Bereich kleiner ist als der Abstand zweier gegenüberliegender Punkte auf der Innenfläche des Halsringes (12) im an das Formunterteil (13) anschließenden Bereich.

6. Vorrichtung zum Pressen von Bildschirmen nach Anspruch 1 aus einem Glasposten mit einem Preßwerkzeug (10), das einen Preßstempel (11), ein Formunterteil (13) und einen darauf aufsitzenden Halsring (12) aufweist und **dadurch gekennzeichnet** ist, daß die Innenfläche des Formunterteils (13) im von dem Halsring (12) beabstandeten Ringbereich im wesentlichen parallel zur Längsachse (15) des Preßstempels (11) ausgebildet ist.

7. Vorrichtung nach Anspruch 7, **dadurch gekennzeichnet**, daß der Abstand zweier gegenüberliegender Punkte auf der Innenfläche des Formunterteils (13) im an den Halsbereich (12) anschließenden Bereich kleiner als im davon beabstandeten, im wesentlichen parallel zur Längsachse (15) des Preßstempels (11) ausgebildeten Bereich ist.

8. Vorrichtung nach einem der Ansprüche 4 bis 9, **dadurch gekennzeichnet**, daß die Innenflächen des Formunterteils (13) im an dem Halsring (12) anschließenden Bereich (14) um 0,5° bis 2° von der Längsachse (15) des Preßstempels (11) weggeneigt ist.
